# EUROPEAN PATENT APPLICATION

(11) **EP 0 777 981 A2**
(43) Date of publication of application: **11.06.1997**
(21) Application number: 96119348.9
(22) Date of filing: 03.12.1996
(51) Int. Cl.: A43B 9/18, A43B 5/16, A43B 5/00

(54) **Shoe, particularly for skates**

(30) Priority: 06.12.1995 IT TV950068 U
(71) Applicant: Mixer S.r.l., 31035 Crocetta del Montello (Treviso) (IT)
(72) Inventor: Montagner, Ivo, 31044 Montebelluna (Treviso) (IT)
(74) Representative: Forattini, Amelia

(57) **Abstract**

The present invention relates to a shoe (2), particularly adapted for skates (1), which comprises an upper (6) made of plastic with which a cuff (12) is optionally rotatably associable. At least one layer (8) of more rigid material, allowing better transmission of forces during sports practice, is injection-molded in place at the sole (7) of the upper (6).

## Description

The present invention relates to a shoe particularly for skates.

Shoes for skates are nowadays known which are usually constituted by an upper with which it is possible to associate or articulate a quarter; the upper is formed monolithically, preferably from plastic, and has such a shape as to form a sole in a downward region; the sole is associated with an underlying rigid and usually U-shaped support or frame, between the wings of which wheels are pivoted.

These skate shoes must meet mutually contrasting requirements: on the one hand, there is the need to have, at the sole, particular rigidity in order to allow optimum connection to the underlying support, which is considerably more rigid, and optimum transmission of forces to the underlying frame, particularly during thrusting; on the other hand, there is the contrasting need to obtain an upper that is soft enough to provide optimum foot comfort throughout the sports practice period.

In these conventional types of skate shoes, a compromise is made in choosing the rigidity of the material for the upper, and therefore there are drawbacks: since the upper is formed monolithically and with the same plastic material i.e. with an equal rigidity, it cannot simultaneously meet both of the above requirements, since the use of an excessively soft material would allow to obtain a comfortable upper but would not allow to obtain a sole with such characteristics as to allow good connection to the support and good force transmission, whereas an excessively rigid material would lead to a poorly flexible upper.

The aim of the present invention is therefore to solve the mentioned technical problems, eliminating the drawbacks of the mentioned prior art, by providing a shoe particularly for skates which allows optimum connection to the wheel support and optimum transfer of the thrust applied by the user, at the same time allowing to achieve optimum comfort for the user's foot throughout the period of sports practice.

Within the scope of this aim, an important object of the present invention is to provide a shoe which is structurally simple and easy to industrialize and allows to increase the effectiveness of the thrust applied by the user.

Another important object is to provide a shoe which has optimum fit.

Another object is to obtain a shoe which has reduced production costs.

This aim, these objects, and others which will become apparent hereinafter are achieved by a shoe, particularly for skates, which comprises an upper made of plastic with which a cuff is rotatably associable, said upper defining a sole in a downward region thereof, characterized in that at least one layer of a material which is more rigid than the material the upper is made of, is injection-molded in place at the sole of the upper.

Further characteristics and advantages of the invention will become apparent from the detailed description of a particular embodiment, illustrated only by way of non-limitative example in the accompanying drawings, wherein:
Figure 1 is an elevated side view of the shoe according to the present invention, associated with a frame of a skate;
Figure 2 is an elevated side view of the shoe according to the present invention;
Figure 3 is a sectional view, taken along a median plane which runs longitudinally with respect to the shoe of Figure 2.

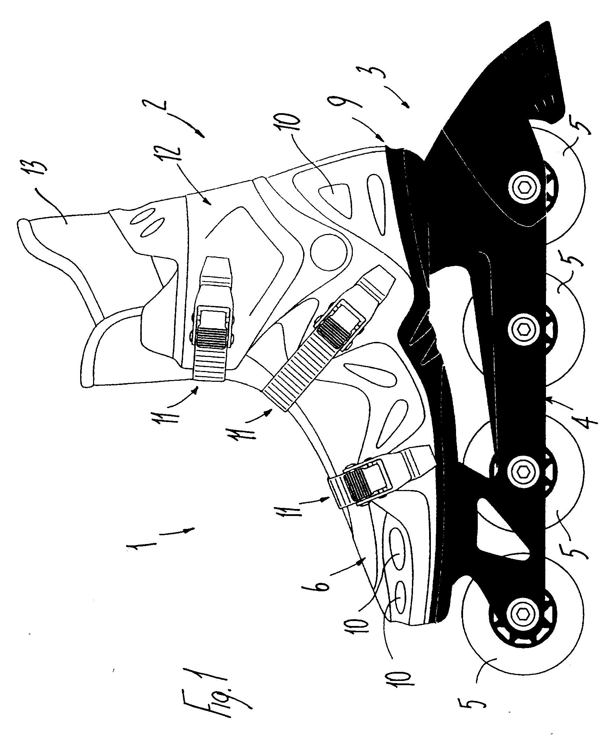

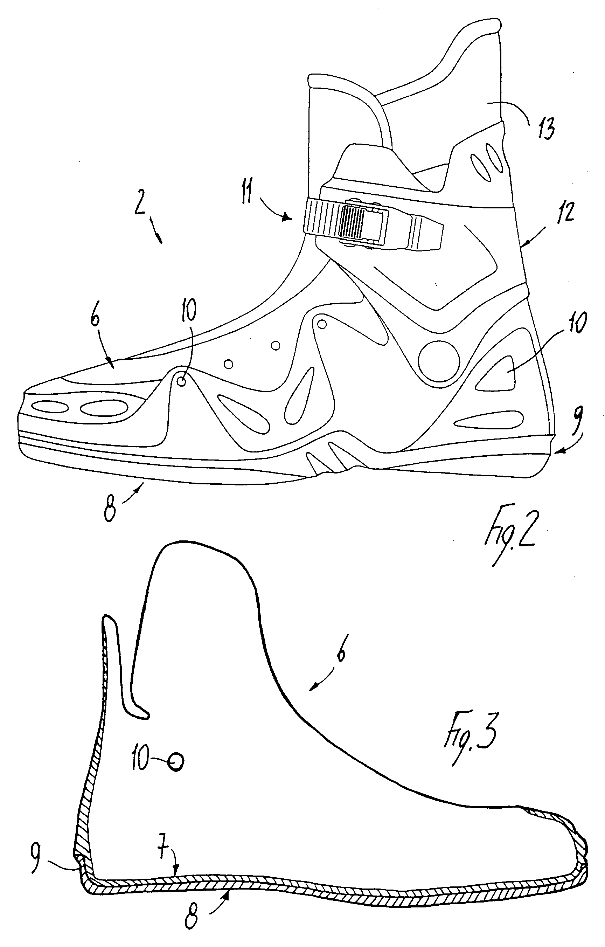

With reference to the above figures, the numeral 1 designates a skate which is constituted by a shoe 2, below which a frame 3 is associated; the frame is essentially U-shaped in transverse cross-section, and multiple in-line wheels 5 are pivoted between the wings 4 of the frame 3, which protrude towards the ground.

The shoe 2 is constituted by an upper 6, which is made monolithically of plastic which has such a rigidity as to allow an intended flexibility of the upper 6; the upper 6 has a lower region which forms a sole 7.

At least one layer 8 of a material that is more rigid than the one used to obtain the upper 6 is injection-molded in place or associated with the upper 6 on the outside of the sole 7.

The layer 8 preferably has an edge 9 which protrudes upward and blends with the lateral surface of the upper 6 in the region adjacent to the sole 7.

It is of course possible to associate with the upper 6 multiple layers 8 of materials having mutually identical or different rigidities and suitable to obtain an intended rigidity for the shoe 2 in the lower region for connection to the frame 3.

The upper 6 furthermore has suitable holes or openings 10 in the metatarsal and lateral region of the foot, which allow the connection of a suitable engagement means 11, constituted by hooks or levers of a conventional type.

A cuff 12 can be articulated to the upper 6 and associated at the malleolar region by virtue of appropriate studs or rivets.

A soft innerboot 13, suitable to improve the comfort of the shoe 2, can furthermore be associated with the shoe 2.

It has thus been observed that the invention has achieved the intended aim and objects; the shoe in fact has a differentiated rigidity which allows to achieve both optimum connection to the underlying frame, optimum transmission of forces applied by the user during sports practice, and good comfort for the user's foot.

The layer 8, injection-molded in place below the upper 6, allows to provide the upper 6 by virtue of an appropriate soft material, thus allowing an intended flexibility in order to achieve the above mentioned optimum comfort for the shoe.

The connection of the layer 8 can occur by injection-molding in place or by gluing.

The materials and the dimensions that constitute the individual components of the shoe may of course also be the most appropriate according to the specific requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A shoe, particularly for skates, comprising an upper (6) made of plastic with which a cuff (12) is rotatably associable, said upper defining a sole (7) in a downward region thereof, characterized in that at least one layer (8) of a material more rigid than the material the upper is made of is injection-molded in place at the sole (7) of said upper (6).

2. A shoe according to claim 1, characterized in that said at least one layer (8) of material that is more rigid than the one used to obtain said upper (6) preferably has an edge (9) which protrudes upward and blends with the lateral surface of said upper (6) in the region adjacent to said sole (7).

3. A shoe according to claims 1 and 2, characterized in that multiple layers (8) of material having mutually identical and/or different rigidities are associable with said upper (6) and are suitable to achieve an intended rigidity for said shoe (2) in the lower region for connection to a frame (3).
